# EUROPÄISCHE PATENTSCHRIFT

(11) **EP 0 357 015 B1**
(45) Veröffentlichungstag und Bekanntmachung des Hinweises auf die Patenterteilung: **13.10.1993**
(21) Anmeldenummer: 89115968.3
(22) Anmeldetag: 30.08.1989
(51) Int. Cl.: B01D 25/168

(54) **Membranfilterplatte für Filterpressen**
Membrane filter press plate for filter presses
Plaque filtrante à membrane pour presse filtrante

(30) Priorität: 01.09.1988 DE 8811071 U
(43) Veröffentlichungstag der Anmeldung: 07.03.1990
(73) Patentinhaber: JV KUNSTSTOFFWERK GMBH, D-91166 Georgensgmünd (DE)
(72) Erfinder: Hermann, Manfred P., Dr., D-8500 Nürnberg 20 (DE)
(74) Vertreter: Tergau, Enno, Dipl.-Ing.

(56) Entgegenhaltungen:
- FR-A- 2 227 891
- GB-A- 1 118 383
- GB-A- 2 069 360
- GB-A- 2 120 570
- GB-A- 2 176 418

## Beschreibung

Die Erfindung betrifft eine Membranfilterplatte für Filterpressen, die in bekannter Weise aus mehreren Teilen aufgebaut ist, zwischen denen wenigstens eine, meist jedoch zwei flexible Gummi- oder Kunststoffmembranen eingeklemmt sind. Die Membranen sind auf einer Seite mit Noppen, Rillen o.dgl. ausgerüstet und mit einem Filtertuch abgedeckt. Mehrere dieser Rahmen werden zum Gebrauch mit ihren Flachseiten aneinanderliegend in eine Filterpresse eingebaut und gegeneinandergedrückt. Durch diesen Druck werden die einzelnen Plattenpakete gegeneinander abgedichtet. Die Platten sind mit einer oder mehreren Öffnungen für den Zulauf des zu filtrierenden Gutes sowie auch mit öffnungen für den Ablauf des Filtrates ausgerüstet. Außerdem sind noch Zuleitungen für ein Druckmedium, beispielsweise Preßluft, Druckwasser o.dgl. vorhanden, welches Druckmedium in den Raum zwischen jeweils zwei zu einem Plattenpaket gehörenden Membranen geleitet werden kann, wodurch es möglich ist, das auf die jeweilige Gegenseite gebrachte Filtriergut unter Druck zu setzen um dadurch vollständiger in Filtrat und Rückstand zu trennen.

Eine derartige Membranfilterplatte ist aus der
**DE-A-35 20 653**
bekannt. Diese bekannte Filterplatte besteht aus einem im wesentlichen fünfteiligen Rahmenpaket. Das Rahmenpaket besteht im wesentlichen aus einem Membranhalterahmen, zwei Membranen und zwei Abdeckrahmen. Die beiden Membranen sind hierbei jeweils im wesentlichen gleichebig zu den einander abgewandten Flachseiten des Membranhalterahmens angeordnet. Jede Membran trägt in ihrem Randbereich einen umlaufenden Randwulst. In die Flachseiten des Membranhalterahmens ist eine der Form des Randwulstes entsprechende Aufnahmenut eingebracht. Der Randwulst ist in die Aufnahmenut einschiebbar zur Lagerung der Membran am Membranhalterahmen.

Auf der dem Membranhalterahmen abgewandten Seite der Membranen sind die Abdeckrahmen angebracht, so daß jede Mebran im Montageendzustand mit ihrem Randwulst zwischen Membranhalterahmen und Abdeckrahmen eingeklemmt einliegt. Die Abdeckrahmen sind ihrerseits mit Hilfe von halterahmenseitigen Federstiften und abdeckrahmenseitigen Aufnahmenuten am Membranhalterahmen befestigt.

Eine Vielzahl derartiger Rahmenpakete wird mit den Flachseiten aneinanderliegend in die Filterpresse eingesetzt und gegeneinander verspannt. Der Klemmdruck zur beschriebenen Einklemmung der Membran zwischen Membranhalterahmen und Abdeckrahmen wird durch den in der Filterpresse wirksamen Verspannungsdruck erzeugt. Die Verspannung der in der Filterpresse dient somit sowohl der Verspannung der einzelnen Rahmenpakete in sich als auch der Verspannung mehrerer Rahmenpakete gegeneinander.

Aus der
**DE-C-23 22 044**
ist ferner bekannt, den Randwulst und entsprechend die Aufnahmenut schwalbenschwanzförmig zu gestalten, um so die Membran formschlüssig am Membranhalterahmen zu befestigen.

Die bekannten Membranfilterplatten haben den Vorteil, daß sie zu Reingungszwecken oder zum Austausch des Filtertuches oder der Membran leicht in Einzelteile zerlegt werden können. Der Vorteil der leichten Zerlegbarkeit ist allerdings bei vielen bekannten Ausführungsformen mit dem Nachteil verbunden, daß solche Platten störanfällig sind, was sich insbesondere dann bemerkbar macht, wenn die in die Presse eingebauten Platten mit Druckmedium beaufschlagt werden, ohne zuvor das Plattenpaket hinreichend verspannt zu haben. Außerdem treten beim Gebrauch der Platten Dehnungen und Schrumpfungen der einzelnen Teile in unterschiedlichem Maße auf, so daß es beim Auswechseln der Membranen und beim Wiederzusammenbau zu Paßschwierigkeiten der Teile kommen kann.

Der Erfindung liegt die Aufgabe zugrunde, die vorbekannten, mehrteiligen Membranfilterplatten derart weiterzuentwickeln, daß im Falle unzureichender Verspannung ein automatischer Druckabbau des Druckmediums, also der zugeführten Preßluft oder des Druckwassers eintritt.

Diese Aufgabe ist durch die Merkmals kombination des Anspruchs 1 gelöst.

Es entsteht auf diese Weise ein einfacher Schnappverschluß, der einerseits die Membran sowie gegebenenfalls auch das Filtertuch sicher mit dem Membranhalterahmen bzw. der Membranhalteplatte verbindet und der andererseits auch als automatisches Entlüftungs- oder Entspannungsventil dient, wenn das Platten- und Membran-Paket nur schwach zusammengepreßt wird.

Um die Konstruktion zur automatischen Entlüftung bzw. zum automatischen Druckabbau noch besser geeignet zu machen, wird vorgeschlagen, daß im Membranhalterahmen bzw. im Rahmenteil der Membranhalteplatte Kanäle vorhanden sind, die den Druckmittelraum mit der Außenluft verbinden und die über die schwalbenschwanzartige Ausnehmung des Rahmenteiles hinausführt. Eine weitere Verbesserung kann noch dadurch erzielt werden, daß der Boden dieser Ausnehmung leicht in Richtung des Rahmenteiles vertieft ist.

Die mehrteiligen Membranfilterplatten der beschriebenen Art lassen sich leicht in ihre Einzelteile zerlegen und wieder zusammenfügen. Dies gilt insbesondere für den Fall, daß die schwalbenschwanzartigen Vertiefungen zusammen mit den Vorsprüngen an den Abdeckrahmen als Schnappverschlüsse ausgebildet sind. In diesem Fall lassen sich die hohlkehlig gestalteten schwalbenschwanzartigen Membranränder leicht in die korrespondierenden Vertiefungen des jeweiligen Rahmenteiles einlegen, da sie infolge der Auskehlung flexibel sind. Danach können die mit Vorsprüngen versehenen Abdeckrahmen aufgedrückt werden, wodurch die Auskehlung ausgefüllt und die Gesamtanordnung stabilisiert wird. Die so vorbereiteten Einzelplatten werden alsdann in bekannter Weise zu Paketen hintereinandergeschaltet und in die Filterpresse eingesetzt. Nach Fertigstellung des Paketes werden die Platten gegeneinandergepreßt, wodurch Platte gegen Patte abgedichtet und das Paket zu einer Funktionseinheit zusammmengefaßt wird. Ist diese Verpressung des Plattenpaketes ordnungsgemäß durchgeführt, so sind alle Dichtstellen geschlossen und die Filterpresse kann einwandfrei funktionieren. Ist die Pressung des Filterpaketes gestört und wird die Einheit versehentlich unter Betriebsdruck gesetzt, so besteht bei vorbekannten Ausführungsformen derartiger Platten die Möglichkeit daß die Membranen und die Filtertücher aus ihren Halterungen gerissen werden und es dadurch zu Betriebsstörungen kommt. Die vorgeschlagene Anordnung beseitigt diese Fehlerquelle, indem in diesem Falle die Schnappverbindung aIl Überdruckventil wirkt, so daß es sogleich zum Druck abbau und damit zur Anzeige der Störung kommt.

Die vorgeschlagene Stabilisierung wirkt in allen Randbereichen des Plattenpaketes annähernd gleichgut. Lediglich bei einigen Ausführungsformen kann es im Bereich der Trübezulauföffnungen, die in aller Regel in Eckbereichen des Plattenpaketes untergebracht sind, zu Störungen kommen, da die Schließkraft der Presse im wesentlichen auf die großflächigen Rahmenteile wirkt und mitunter in denjenigen Bereichen tolerierbare Mindestwerte unterschreitet, die zwischen den Trübezulauföffnungen und Filterräumen liegen. Um diese Schwierigkeit zu umgehen, wird in weiterer Ausgestaltung der Erfindung vorgeschlagen, daß die Abdeckrahmen je Eckbereich des Trübezulaufes ausgespart und in den entsprechenden Bereich der Auskehlungen der Membranrahmen im ein Rundprofil eingesetzt sind, wobei diese Rundprofile entweder an einer Tuchverschraubung integriert sind oder einzeln direkt mit dem Membrangrundkörper oder auch gegeneinander verspannt, z.B. verschraubt sind.

Die Erfindung wird im folgenden anhand der beigefügten Zeichnung näher erläutert. Es stellen dar:
- Fig. 1: eine perspektivische Darstellung einer Ausführungsform einer fünfteiligen Membranfilterplatte als Ausschnitt;
- Fig. 2: eine vereinfachte Darstellung des Querschnittes der Membranfilterplatte gemäß Fig. 1;
- Fig. 3: eine andere Ausführungsform des Querschnittes nach Fig. 2 mit zusätzlichen Entlüftungskanälen;
- Fig. 4-6: Detaildarstellungen eines Eckbereiches des Plattenpaketes nach Fig. 1 mit Trübezulauföffnung.

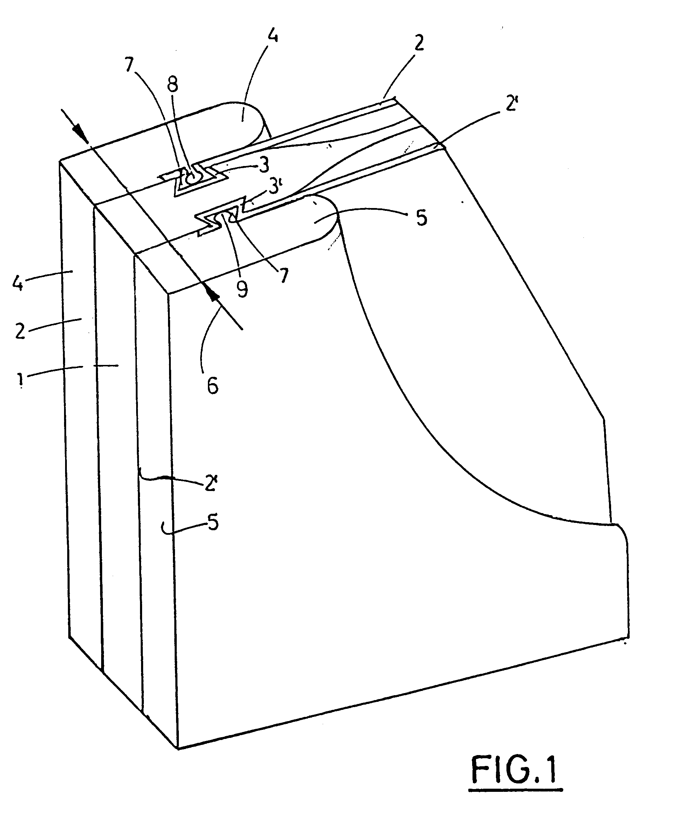

In Fig. 1 ist ein Ausschnitt einer mehrteiligen Membranfilterplatte vereinfacht dargestellt. Die Vereinfachung besteht darin, daß alle Zu- und Ablaufkanäle fortgelassen sind sowie auch die erforderlichen Dichtungen, welche die Platten gegeneinander abdichten sowie schließlich die Oberflächenstrukturen der Membranen, also alle Merkmale, die zum Verständnis der Erfindung nicht erforderlich sind. Die dargestellte Membranfilterplatte besteht im wesentlichen aus einem Membranhalterahmen (1), der - wie in der Praxis meist üblich - als Zentralrahmen ausgebildet ist und an dem beidseitig je eine Membran (2,2′) befestigt ist. Anstelle des Membranhalterahmens kann naturgemäß auch eine Membranhalteplatte eingesetzt werden, wie dies in Fig. 1 angedeutet ist.

Die Ränder der Membranen (2,2′) sind schwalbenschwanzartig geformt und greifen in eine entsprechende schwalbenschwanzartige Ausnehmung (3,3′) des Membranhalterahmens bzw. der Membranhalteplatte (1) ein. Zum Festklemmen der Membranen sind Abdeckrahmen (4,5) vorhanden so daß die Einheit in dieser Form insgesamt aus einem fünfschichtigen Paket besteht. Nach Einbau mehrerer dieser Pakete in den Rahmen der Filterpresse werden die Pakete in Richtung des Doppelpfeiles (6) zusammengepreßt und gegeneinander abgedichtet.

Der Membranrand weist im schwalbenschwanzförmigen Bereich eine Auskehlung (7) auf, welche diesen Membranbereich elastisch verformbar und deshalb leicht in die entsprechende Ausnehmung des Membranhalterahmens (1) bzw. der Membranhalteplatte einsetzbar macht. Die Abdeckrahmen (4,5) haben an der mit der Auskehlung (7) korrespondierenden Stelle einen Vorsprung (8 bzw. 9)der jeweils im zusammengesetzten Zustand in die Auskehlung eingreift. Die Auskehlung wird dadurch mit nicht kompressiblem Material ausgefüllt, so daß die Membran nunmehr fest in ihrem schwalbenschwanzförmigen Lager gehalten wird. Die Gesamtanordnung ist dabei vorzugsweise als Schnappverschluß ausgebildet. d.h. die Größen der erwähnten Formen sind so aufeinander abgestimmt, daß die Teile unter Berücksichtigung der Membranstärke unter leichtem Druck ineinandergleiten und dann in dieser Stellung verharren.

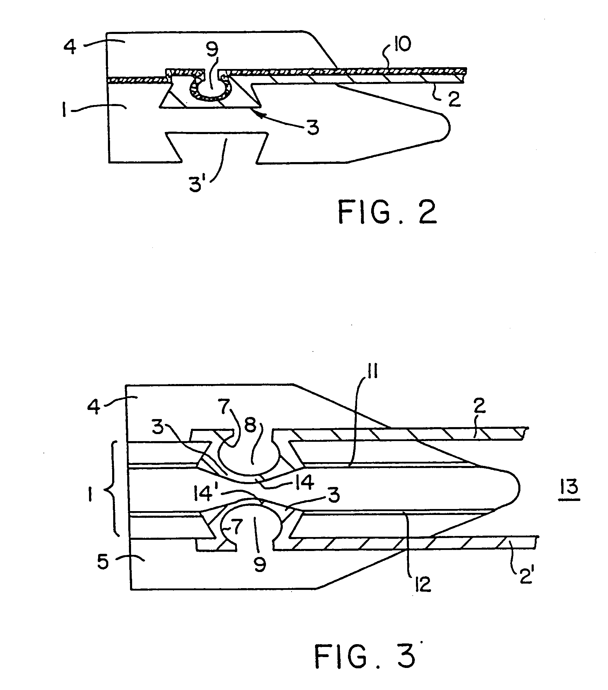

Vorteilhaft ist es, wenn nicht nur die Membranen (2,2′) auf diese Weise festgelegt werden, sondern zusätzlich auch die Filtertücher, welche auf der Trübeseite die Membranen bei Betrieb der Einrichtung bedecken. Es entsteht in diesem Fall eine Anordnung, wie sie schematisch in Fig. 2 dargestellt ist, wobei das Filtertuch dort mit (10) bezeichnet ist.

In Fig. 3 sind Merkmale einer weiteren Ausführungsform schematisch wiedergegeben. Auch dort ist ein Membranhalterahmen (1) vorhanden, in welchem schwalbenschwanzarti ge Ausnehmungen eingearbeitet sind. In diese Ausnehmungen ist der ebenfalls schwalbenschwanzförmige Rand der Membranen (2 bzw. 2′) eingelegt, wobei das Filtertuch der Einfachheit halber nicht dargestellt ist. Die schwalbenschwanzförmigen Membranränder sind mit Auskehlungen (7) versehen, in welche Vorsprünge (8,9) der Abdeckrahmen (4,5) eingreifen. Zusätzlich sind Kanäle (11,12) vorhanden, welche den Druckmittelraum (13) der Filterplatte mit der Außenluft verbinden und die über die Ausnehmungen (3,3′) führen. Des weiteren ist aus Fig. 3 ersichtlich, daß der jeweilige Boden (14,14′) der Ausnehmung leicht in Richtung des Membranhalterahmens vertieft ist. Tritt nun der Fall ein, daß beim Zusammenbau des Filterplattenpaketes versehentlich der Schließdruck zu niedrig war, und es wird der Druckmittelraum (13) mit Druckmittel beaufschlagt, so kann dieses Druckmittel über Kanäle (11,12) nach außen entweichen, wobei es die Membran (2 bzw. 2′) nach Art eines Ventiles von den Böden (14 bzw. 14′) abhebt. Ist hingegen der Schließdruck hinreichend groß und somit die Anpressung im Bereich der Böden (14,14′) stärker, so wird der Innendruck im Druckmittelraum (13) nicht abgebaut.

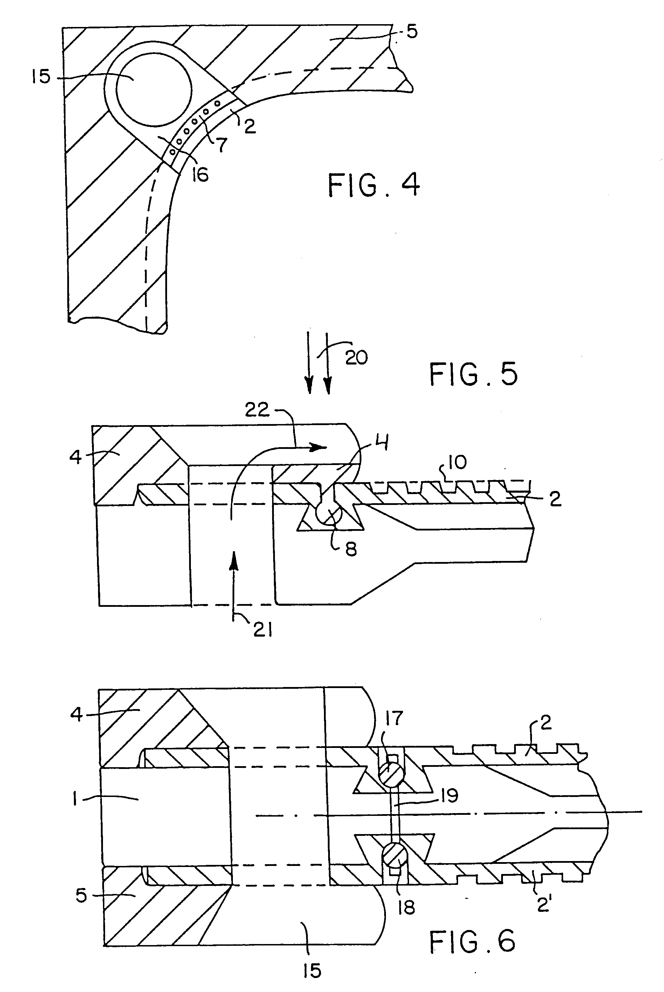

In Fig 4 ist ein Eckbereich des Rahmenpaketes in der Draufsicht wiedergegeben. Der oberste Rahmen, auf welchen man schaut, ist der Abdeckrahmen (5). In dem dar gestellten Eckbereich ist eine Trübezulauföffnung (15) eingearbeitet. Der Abdeckrahmen (5) (und ebenso der nicht dargestellte Abdeckrahmen (4)) ist in diesem Eckbereich des Trübezulaufes ausgespart, so daß dort ein freier Bereich (16) entstehen, in welchem die darunterliegende Membran (2 bzw. 2′) sichtbar ist. In diesem Bereich ist in die Auskehlung (7) der Membranrahmen je ein Rundprofil (17,18) eingesetzten, wobei - siehe Fig. 6 - die beiden sich gegenüberliegenden Rundprofile (17 und 18) gegeneinander durch Schrauben (19) verschraubt sind. Die Folge dieser Maßnahme ist, daß auch in diesem Eckbereich die Membranen dichtend in die schwalbenschwanzartigen Ausnehmungen des Membranhalterahmens (1) eingreifen.

In Fig. 5 ist die Normalausführung gemäß Figur 1 in einem vergrößerten Querschnitt wiedergegeben. Die Schließkraft der Filterpresse wirkt wie aus dieser Figur ersichtlich, entsprechend den Doppelpfeilen (20). Der Zulauf der zu filtrierenden Suspension erfolgt entsprechend Pfeil (21), wobei sich die Suspension dann entsprechend Pfeil (22) in die Filtrierkammern ergießt.

## Patentansprüche

1. Membranfilterplatte für eine Filterpresse
a) mit einem Rahmenpaket gebildet
aa) aus einem Membranhalterahmen (1) oder einer Membranhalteplatte,
bb) aus einem Abdeckrahmen (4,5) und
cc) aus einer
- zwischen Membranhalterahmen (1) oder Membranhalteplatte und Abdeckrahmen (4,5) angeordneten,
- am Membranhalterahmen (1) oder der Membranhalteplatte befestigten,
Membran (2), wobei
dd) sich in einem Eckbereich Durchbrechungen zur Bildung des Trübezulaufes und des Filtratablaufes befinden,
b) mit einem der Membran (2)-Abdeckrahmen (4,5)-Kombination zugeordneten Filtertuch (10)
c) mit einem im Querschnitt schwalbenschwansförmigen Membranrand und
d) mit einer entsprechend schwalbenschwanzförmigen Ausnehmung (3,3') im Membranhalterahmen (1) oder in der Membranhalteplatte zur Befestigung der Membran am Membranhalterahmen oder an der Membranhalteplatte, gekennzeichnet durch
e) eine Auskehlung (7) im schwalbenschanzförmigen Bereich des Membranrandes und
f) einen der Auskehlung (7) entsprechenden Vorsprung (8,9) am Abdeckrahmen (4,5) zur Befestigung des Abdeckrahmens (4,5) an der Membran (2).

2. Membranfilterplatte nach Anspruch 1,
dadurch gekennzeichnet,
daß an beiden Flachseiten des Membranhalterahmens (1) oder der Membranhalteplatte jeweils eine Membran (2) und ein zugehöriger Abdeckrahmen (4,5) angeordnet sind.

3. Membranfilterplatte nach Anspruch 1 oder Anspruch 2,
dadurch gekennzeichnet,
- daß der Membranhalterahmen (1), der Abdeckrahmen (4,5), die Membran (2,2') und das Filtertuch (10) unter Druck gegeneinander preßbar sind und
- daß der Vorsprung (8) des Abdeckrahmens (4,5) unter Zwischenlage der Membran (2,2') und des Filtertuches (10) in der Ausnehmung (3,3') des Membranhalterahmens derart einliegt, daß der Vorsprung (8) und die Ausnehmung (3,3') aufgrund dieses Drucks als Klemmverschluß zwischen dem Membranhalterahmen (1) und dem Abdeckrahmen (4,5) wirksam sind.

4. Membranfilterplatte nach einem oder mehreren der vorhergehenden Ansprüche,
dadurch gekennzeichnet,
daß im Membranhalterahmen (1) eingeformte Kanäle (11,12) den zwischen dem Membranhalterahmen (1) oder der Membranhalteplatte und der benachbarten Membran (2,2') gebildeten Druckmittelraum (13) mit der Außenluft verbinden derart, daß die Kanäle (11,12) von den Ausnehmungen (3,3') unterbrochen sind zur leitungsmäßigen Verbindung von Druckmittelraum (13), Ausnehmung (3,3') und Außenluft.

5. Membranfilterplatte nach Anspruch 4,
dadurch gekennzeichnet,
daß der Boden (14,14') der Ausnehmung (3,3') leicht in Richtung des Membranhalterahmens vertrieft ist.

6. Membranfilterplatte nach einem der Ansprüche 1 bis 5,
dadurch gekennzeichnet,
- daß die Eckbereiche des Rahmenpakets Durchbrechungen zur Bildung des Trübezulaufes und/oder des Filtratablaufes aufweisen,
- daß die Abdeckrahmen (4,5) im Eckbereich des Trübezulaufes und/oder des Filtratablaufes ausgespart sind und
- daß in den entsprechenden Bereich der Auskehlung (7) Membranrundprofile (17,18) eingesetzt sind.

7. Membranfilterplatte nach Anspruch 6,
dadurch gekennzeichnet,
daß die Membranrundprofile (17,18) in eine Tuchverschraubung integriert sind.

8. Membranfilterplatte nach Anspruch 6,
dadurch gekennzeichnet,
daß die Membranrundprofile (17,18) einzeln direkt mit dem Membrangrundkörper verspannt sind oder auch gegeneinander verspannt, beispielsweise verschraubt sind.

## Claims

1. A membrane filter plate for a filter press
a) with a frame package formed
aa) by a membrane mounting frame (1) or a membrane mounting plate,
bb) by a cover frame (4, 5) and
cc) by a membrane (2)
- arranged between the membrane mounting frame (1) or the membrane mounting plate and the cover frame (4, 5),
- secured to the membrane mounting frame (1) or the membrane mounting plate,
wherein
dd) openings are located in a corner zone for forming the pulp inlet and the filtrate outlet,
b) with a filter fabric (10) assigned to the membrane (2)-cover frame (4, 5) combination,
c) with a membrane edge that is dovetail-shaped in cross-section, and
d) a corresponding dovetail-shaped recess (3, 3') in the membrane mounting frame (1) or in the membrane mounting plate for securing the membrane to the membrane mounting frame (1) or to the membrane mounting plate,
characterized by
e) a groove (7) in the dovetail-shaped zone of the membrane edge and
f) a projection (8, 9) on the cover frame (4, 5) corresponding to the groove (7) for securing the cover frame (4, 5) to the membrane (2).

2. A membrane filter plate according to claim 1,
characterized in that
one membrane (2) and an associated cover frame (4, 5) are respectively arranged on both flat sides of the membrane mounting frame (1) or the membrane mounting plate.

3. A membrane filter plate according to claim 1 or claim 2,
characterized in that
- the membrane mounting frame (1), the cover frame (4, 5), the membrane (2, 2') and the filter fabric (10) can be pressed together under pressure and
- that the projection (8) of the cover frame (4, 5) lies in the recess (3, 3') of the membrane mounting frame, with the interposition of the membrane (2, 2') and of the filter fabric (10), in such a way that the projection (8) and the recess (3, 3') act because of this pressure, as a clamping seal between the membrane mounting frame (1) and the cover frame (4, 5).

4. A membrane filter plate according to one or more of the preceding claims,
characterized in that
ducts (11, 12) formed in the membrane mounting frame (1) connect the pressure medium compartment (13) formed between the membrane mounting frame (1) or the membrane mounting plate and the adjoining membrane (2, 2' ) to the ambient air in such a way that the ducts (11, 12) are interrupted by the recesses (3, 3') for a line connection of the pressure medium compartment (13), the recess (3, 3') and the ambient air.

5. A membrane filter plate according to claim 4,
characterized in that
the bottom (14, 14') of the recess (3, 3') becomes slightly deeper towards the membrane mounting frame.

6. A membrane filter plate according to one of claims 1 to 5,
characterized in that
- the corner zones of the frame package have openings for forming the pulp inlet and/or the filtrate outlet,
- the cover frames (4, 5) are recessed in the corner zone of the pulp inlet and/or of the filtrate outlet and
- round membrane sections (17, 18) are inserted into the corresponding zone of the groove (7).

7. A membrane filter plate according to claim 6,
characterized in that
the round membrane sections (17, 18) are integrated in a fabric-packed screwed joint.

8. A membrane filter plate according to claim 6,
characterized in that
the round membrane sections (17, 18) are directly fastened individually to the membrane base body or also fastened tightly to each other, being for example, screwed together.

## Revendications

1. Plaque filtrante à membrane pour filtre-presse comportant
a) un ensemble de cadres constitué
aa) d'un cadre support de membrane (1) ou d'une plaque support de membrane,
bb) d'un cadre de recouvrement (4, 5) et cc) d'une membrane
- disposée entre un cadre support de membrane (1) ou plaque support de membrane et un cadre de recouvrement (4, 5),
- fixée au cadre support de membrane (1) ou à la plaque support de membrane,
dd) des ouvertures se trouvant dans une zone de coin pour constituer l'arrivée de la solution trouble et la sortie du filtrat,
b) un tissu filtrant (10) correspondant à une combinaison de la membrane (2) - cadre de recouvrement (4, 5),
c) un bord de membrane ayant une section transversale en forme de queue d'hirondelle et
d) une cavité (3, 3') en forme de queue d'hirondelle correspondante dans le cadre support de membrane (1) ou dans la plaque support de membrane, destinée à la fixation de la membrane au cadre support de membrane ou à la plaque support de membrane, caractérisée par
e) une cannelure (7) située dans la partie en forme de queue d'hirondelle du bord de la membrane et
f) une avancée (8, 9) correspondant à la cannelure (7) située sur le cadre de recouvrement (4, 5) pour la fixation du cadre de recouvrement (4, 5) à la membrane (2).

2. Plaque filtrante à membrane selon la revendication 1, caractérisée en ce que sur les deux faces plates du cadre support de membrane (1) ou de la plaque support de membrane, sont disposés chaque fois une membrane (2) et un cadre de recouvrement correspondant (4, 5).

3. Plaque filtrante à membrane selon la revendication 1 ou la revendication 2, caractérisée en ce que
- le cadre support de membrane (1), le cadre de recouvrement (4, 5), la membrane (2, 2') et le tissu filtrant (10) peuvent être pressés l'un contre l'autre sous pression et
- l'avancée (8) du cadre de recouvrement (4, 5) est insérée avec intercalation de la membrane (2, 2') et du tissu filtrant (10) dans la cavité (3, 3') du cadre support de membrane de telle façon que l'avancée (8) et la cavité (3, 3') constituent en vertu de l'action de cette pression, une fermeture par serrage entre le cadre support de membrane (1) et le cadre de recouvrement (4, 5).

4. Plaque filtrante à membrane selon une ou plusieurs des revendications précédentes, caractérisée en ce que des canaux (11, 12) formés dans le cadre support de membrane (1) relient l'air extérieur à l'espace de pression formé entre le cadre support de membrane (1) ou la plaque support de membrane et la membrane avoisinante (2, 2') de telle sorte que les canaux (11, 12) sont interrompus par les cavités (3, 3') pour que s'établisse une liaison par conduits entre l'espace de pression (13), la cavité (3, 3') et l'air extérieur.

5. Plaque filtrante à membrane selon la revendication 4, caractérisée en ce que les fonds (14, 14') de la cavité (3, 3') sont légèrement bombés en direction du cadre support de membrane.

6. Plaque filtrante à membrane selon l'une des revendications 1 à 5, caractérisée en ce que
- les zones de coin de l'ensemble de cadres présentent des interruptions destinées à constituer l'arrivée de la solution trouble et/ou de la sortie du filtrat,
- dans la zone de coin destinée à l'arrivée de la solution trouble et/ou la sortie du filtrat, le cadre de recouvrement (4, 5) est évidé et
- des parties rondes de membrane (17, 18) sont disposées dans la zone correspondante de la cannelure (7).

7. Plaque filtrante à membrane selon la revendication 6, caractérisée en ce que les parties rondes de membrane (17, 18) sont intégrées dans une partie vissée du tissu.

8. Plaque filtrante à membrane selon la revendication 6, caractérisée en ce que les parties rondes de membrane (17, 18) sont fixées individuellement directement avec le corps même de la membrane ou également fixées l'une par rapport à l'autre, par exemple par vissage.
